(19) Europäisches Patentamt
European Patent Office
Office européen des brevets

(11) **EP 3 316 395 B1**

(12) **EUROPÄISCHE PATENTSCHRIFT**

(45) Veröffentlichungstag und Bekanntmachung des Hinweises auf die Patenterteilung:
**05.06.2019 Patentblatt 2019/23**

(51) Int Cl.:
**H01Q 1/12** *(2006.01)*  **F16B 2/12** *(2006.01)*
**F16B 7/04** *(2006.01)*  **E04H 12/22** *(2006.01)*

(21) Anmeldenummer: **16196412.7**

(22) Anmeldetag: **28.10.2016**

(54) **BEFESTIGUNGSEINRICHTUNG UND VERFAHREN ZU DEREN HERSTELLUNG**

FIXING DEVICE AND METHOD FOR ITS MANUFACTURE

DISPOSITIF DE FIXATION ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.05.2018 Patentblatt 2018/18**

(73) Patentinhaber:
• **Engbarth, Hans-Georg**
**47608 Geldern (DE)**
• **Eyckmann, Heinrich Bartholomäus**
**47608 Geldern (DE)**

(72) Erfinder:
• **Engbarth, Hans-Georg**
**47608 Geldern (DE)**

• **Eyckmann, Heinrich Bartholomäus**
**47608 Geldern (DE)**

(74) Vertreter: **Fischer, Uwe**
**Patentanwalt**
**Moritzstraße 22**
**13597 Berlin (DE)**

(56) Entgegenhaltungen:
**EP-A1- 2 913 536    DE-A1-102005 047 898**
**US-B1- 6 937 207**

Bemerkungen:
Die Akte enthält technische Angaben, die nach dem Eingang der Anmeldung eingereicht wurden und die nicht in dieser Patentschrift enthalten sind.

EP 3 316 395 B1

**Beschreibung**

Die Erfindung bezieht sich auf eine Befestigungseinrichtung mit einem Mast, einer Montagebasis und Haltemitteln sowie im Übrigen mit den Merkmalen gemäß dem Oberbegriff des Patentanspruchs 1. Eine solche Befestigungseinrichtung ist in Form eines Antennenhalters aus der Europäischen Druckschrift EP 2 913 536 A1 und der deutschen Druckschrift DE 10 2005 047 898 A1 bekannt.

Die Druckschrift US 6 937 207 B1 offenbart ein Verfahren zum Anbringen von Antennenelementen bei einer Yagi-Antenne.

Der Erfindung liegt die Aufgabe zugrunde, eine Befestigungseinrichtung anzugeben, bei der die Haltekraft der Haltemittel an der Montagebasis besonders groß ist.

Diese Aufgabe wird erfindungsgemäß durch eine Befestigungseinrichtung mit den Merkmalen gemäß Patentanspruch 1 gelöst. Vorteilhafte Ausgestaltungen der erfindungsgemäßen Befestigungseinrichtung sind in Unteransprüchen angegeben.

Ein wesentlicher Vorteil der erfindungsgemäßen Befestigungseinrichtung ist darin zu sehen, dass das Gewindeelement durch Reib- und/oder Formschluss eine besonders große Haltekraft der Haltemittel auf der Montagebasis bereitstellen kann. Die Haltekraft der Haltemittel beruht bei der erfindungsgemäßen Befestigungseinrichtung - im Unterschied zu der vorbekannten Befestigungseinrichtung - nämlich nicht allein auf der Haltekraft, insbesondere dem Reib- und/oder Formschluss, zwischen dem Klemmelement bzw. dem Gegenklemmelement und der Montagebasis, sondern zusätzlich auch auf dem Einfluss des Gewindeelements, das zusätzlich mit der Montagebasis zusammenwirkt und ein Verdrehen des Masts gegenüber der Montagebasis zusätzlich erschwert.

Das oder die Innengewinde überlappen sich vorzugsweise mit dem oder den zugeordneten Durchgangslöchern. Bevorzugt ist jedes der Innengewinde zu seinem zugeordneten Durchgangsloch fluchtend oder koaxial angeordnet.

Vorzugsweise verjüngt sich das Gewindeelement zu seinem auf der Montagebasis aufliegenden oder in dieses hineinragenden Ende hin.

Mit Blick auf besonders große Haltekräfte wird es als vorteilhaft angesehen, wenn das Gewindeelement in ein Loch in der Montagebasis hineinragt und der Durchmesser des Gewindeelements im Bereich seines vorderen in die Montagebasis hineinragenden Endes maximal 80% des Durchmessers beträgt, den der mit dem Innengewinde verschraubte Abschnitt des Gewindeelements aufweist.

Besonders bevorzugt beträgt der Durchmesser des Gewindeelements im Bereich seines vorderen in die Montagebasis hineinragenden Endes maximal nur 50% des Durchmessers, den der mit dem Innengewinde verschraubte Abschnitt des Gewindeelements aufweist.

Bei einer bevorzugten Ausgestaltung der Befestigungseinrichtung ist das Innengewinde in dem Durchgangsloch bzw. in der Lochwand des Durchgangslochs ausgebildet, insbesondere in diese hineingeschnitten oder hineingepresst. Das Innengwinde ist bei dieser Ausgestaltung sozusagen ein internes Innengewinde des Durchgangslochs.

Bei einer anderen bevorzugten Ausgestaltung der Befestigungseinrichtung weist das Klemmelement und/oder das Gegenklemmelement ein das Innengewinde tragendes Innengewindeelement, insbesondere in Form einer Mutter, auf, das an der Außenseite oder Innenseite des Klemmelements bzw. Gegenklemmelements angebracht ist und mit dem Durchgangsloch überlappt, insbesondere fluchtet. Das Innengwinde ist bei dieser Ausgestaltung bezüglich des Durchgangslochs sozusagen ein externes Innengewinde.

Vorteilhaft ist es, wenn das Gewindeelement eine Schraube ist, deren Schraubenkopf auf der Außenseite der Haltemittel, insbesondere der Außenseite des Klemmelements und/oder des Gegenklemmelements, - also bei der Montage von außen - zugänglich ist. Nach einem Festziehen der Schraube liegt diese vorzugsweise an der Außenseite der Haltemittel, insbesondere der Au-ßenseite des Klemmelements und/oder des Gegenklemmelements, an.

Das Klemmelement und/oder das Gegenklemmelement besteht vorzugsweise aus einem einteiligen Metallkörper, wobei auf der Innenseite des Klemmelements und/oder des Gegenklemmelements Stufen ausgebildet sind, die oder zumindest deren Stufenkanten nach der Montage des Klemmelements und/oder des Gegenklemmelements an der Montagebasis anliegen.

Das Klemmelement und/oder das Gegenklemmelement sind bevorzugt aus einem einteiligen quaderförmigen, insbesondere plattenförmigen, Stahlblock durch Materialabtrag mittels eines spanabhebenden Verfahrens hergestellt.

Alternativ kann vorgesehen sein, dass das Klemmelement und/oder das Gegenklemmelement durch ein Bauteil, insbesondere in Form eines U-förmigen Strangpressprofils, gebildet ist, bei dem zwei parallele Endabschnitte jeweils eine äußere Stützwand bilden, die sich auf der Montagebasis abstützt.

Auf der Innenseite des Klemmelements und/oder des Gegenklemmelements ist bei einer bevorzugten Variante mindestens ein Stützelement angeordnet, das sich in Richtung auf die Montagebasis erstreckt und sich auf der Montagebasis abstützt.

Mit Blick auf große Haltekräfte wird es außerdem als vorteilhaft angesehen, wenn das Klemmelement und/oder das Gegenklemmelement im Bereich der eingeklemmten Montagebasis zwei oder mehr Durchgangslöcher aufweist, denen jeweils ein (externes - z. B. mittels eines Innengewindeelements in Form einer Mutter - oder internes - z. B.

eingeschnittenes oder eingepresstes) Innengewinde zugeordnet ist. Eine solche Ausgestaltung ermöglicht den Einsatz von entsprechend zwei oder mehr Gewindeelementen.

Als besonders vorteilhaft wird es angesehen, wenn

- zwei oder mehr Durchgangslöcher auf einer fiktiven Verbindungslinie liegen, die parallel zur Längsrichtung der Montagebasis angeordnet ist, und/oder
- zwei oder mehr Innengewinde auf einer fiktiven Verbindungslinie liegen, die parallel zur Längsrichtung der Montagebasis angeordnet ist, und/oder
- zwei oder mehr Gewindeelemente, die sich auf der Montagebasis abstützen oder, insbesondere durch Bohrlöcher, in diese hineinragen, auf einer fiktiven Verbindungslinie liegen, die parallel zur Längsrichtung der Montagebasis angeordnet ist, und/oder
- Bohrlöcher in der Montagebasis, in die Gewindeelemente hineinragen oder zumindest hineinragen könnten, auf einer fiktiven Verbindungslinie liegen, die parallel zur Längsrichtung der Montagebasis angeordnet ist.

Sind zwei oder mehr Durchgangslöcher vorhanden, so liegt vorzugsweise eines - in Mastlängsrichtung gesehen - vor dem Mast und eines hinter dem Mast. Entsprechendes gilt im Falle von zwei oder mehr Innengewinden, Gewindeelementen und/oder Bohrlöchern: Jeweils eines liegt vorzugsweise - in Mastlängsrichtung gesehen - vor dem Mast und eines hinter dem Mast.

Die Befestigungseinrichtung bildet vorzugsweise einen Antennenhalter oder eine Absturzsicherung.

Die Erfindung bezieht sich außerdem auf ein Verfahren gemäß Patentanspruch 13. Bezüglich der Vorteile des erfindungsgemäßen Verfahrens sei auf die obigen Ausführungen im Zusammenhang mit der erfindungsgemäßen Befestigungseinrichtung verwiesen.

Bei einer bevorzugten Verfahrensvariante ist vorgesehen, dass vor dem Einschrauben des Gewindeelements ein Bohrer, dessen Außendurchmesser kleiner als der Innendurchmesser des Innengewindes ist, durch das Durchgangsloch und das Innengewinde hindurch geführt wird, auf die Montagebasis aufgesetzt wird und ein Bohrloch in die Montagebasis gebohrt wird und das Gewindeelement soweit eingeschraubt wird, dass zumindest das Ende des Gewindeelements in das Bohrloch in der Montagebasis hineinragt.

Bei einer anderen bevorzugten Verfahrensvariante ist vorgesehen, dass das Gewindeelement soweit eingeschraubt wird, dass das Ende des Gewindeelements auf der Montagebasis aufliegt und die Haltemittel und die innenliegende Montagebasis durch das Gewindeelement verklemmt werden.

Die Erfindung wird nachfolgend anhand von Ausführungsbeispielen näher erläutert; dabei zeigen beispielhaft

Figur 1         ein Ausführungsbeispiel für eine erfindungsgemäße Befestigungseinrichtung, die eine Absturzsicherungseinrichtung bildet, in einer dreidimensionalen Sicht schräg von der Seite nach einer Montage an zwei Dachsparren,

Figur 2         ein Klemmelement und ein Gegenklemmelement der Befestigungseinrichtung gemäß Figur 1 näher im Detail,

Figur 3         ein Ausführungsbeispiel für ein Klemmelement, das bei der Befestigungseinrichtung gemäß Figur 1 und 2 eingesetzt werden kann, in einer dreidimensionalen Darstellung mit Blick auf die Innenseite des Klemmelements,

Figur 4         ein Ausführungsbeispiel für ein Gegenklemmelement, das bei der Befestigungseinrichtung gemäß Figur 1 und 2 eingesetzt werden kann, in einer dreidimensionalen Sicht schräg von der Seite auf die Innenseite des Gegenklemmelements,

Fig. 5-7        ein Ausführungsbeispiel für ein Verfahren zum Montieren bzw. Herstellen der Befestigungseinrichtung gemäß Figur 1,

Fig. 8-10      ein weiteres Ausführungsbeispiel für ein Verfahren zum Montieren bzw. Herstellen der Befestigungseinrichtung gemäß Figur 1,

Figur 11       ein weiteres Ausführungsbeispiel für eine erfindungsgemäße Befestigungseinrichtung in einer dreidimensionalen Sicht schräg von der Seite nach einer Montage an zwei Dachsparren, wobei die Befestigungseinrichtung gemäß Figur 11 einen Antennenhalter, insbesondere einen Satellitenantennenhalter, bildet,

Figur 12       ein weiteres Ausführungsbeispiel für ein Klemmelement, das bei der Befestigungseinrichtung gemäß Figur 1 und 11 eingesetzt werden kann, in einer dreidimensionalen Darstellung schräg von der Seite,

Figur 13    noch ein weiteres Ausführungsbeispiel für ein Klemmelement, das bei der Befestigungseinrichtung gemäß Figur 1 und 11 eingesetzt werden kann, in einer dreidimensionalen Darstellung schräg von der Seite,

Fig. 14-16    ein Ausführungsbeispiel für ein Verfahren zum Montieren des Klemmelements gemäß Figur 12 und 13 an einer Montagebasis, beispielsweise der Montagebasis der Befestigungseinrichtung gemäß den Figuren 1 und 11,

Figur 17    näher im Detail ein Ausführungsbeispiel für ein zumindest abschnittsweise mit einem Außengewinde versehenes Gewindeelement, das für die Befestigungseinrichtungen, wie sie im Zusammenhang mit den Figuren 1 bis 16 beschrieben werden, geeignet und schraubenförmig ist,

Figur 18    näher im Detail ein Ausführungsbeispiel für ein zumindest abschnittsweise mit einem Außengewinde versehenes Gewindeelement, das für die Befestigungseinrichtungen, wie sie im Zusammenhang mit den Figuren 1 bis 16 beschrieben werden, geeignet und durch eine Gewindestange gebildet ist,

Figur 19    näher im Detail ein Ausführungsbeispiel für ein zumindest abschnittsweise mit einem Außengewinde versehenes Gewindeelement, das für die Befestigungseinrichtungen, wie sie im Zusammenhang mit den Figuren 1 bis 16 beschrieben werden, geeignet ist und durch einen Bolzen gebildet ist, und

Figur 20    ein weiteres Ausführungsbeispiel für ein Gegenklemmelement, das für die Befestigungseinrichtungen, wie sie im Zusammenhang mit den Figuren 1 bis 16 beschrieben werden, geeignet ist.

In den Figuren werden der Übersicht halber für identische oder vergleichbare Komponenten stets dieselben Bezugszeichen verwendet.

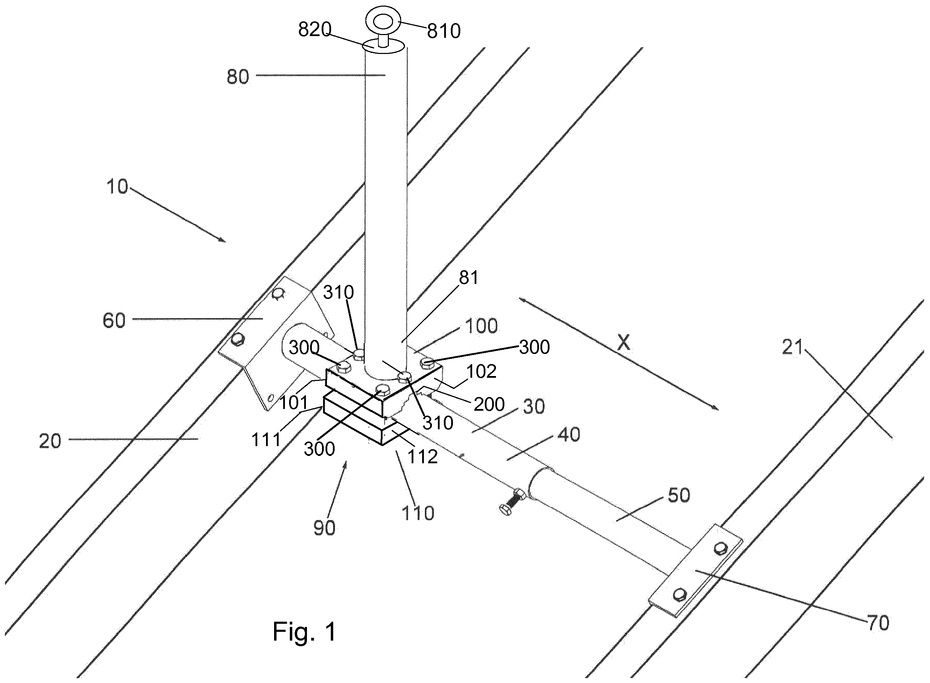

Die Figur 1 zeigt eine Befestigungseinrichtung 10 in Form einer Absturzsicherungseinrichtung, die auf zwei benachbarten parallelen Dachsparren 20 und 21 aufgeschraubt ist. Die Befestigungseinrichtung 10 weist eine Montagebasis 30 auf, die ein Außenrohr 40 und ein in dem Außenrohr 40 verschiebbar gehaltenes Innenrohr 50 umfasst. Durch Ineinanderschieben des Innenrohrs 50 und des Außenrohrs 40 lässt sich die Länge der Montagebasis 30 entlang der Längsrichtung der Rohre 40 und 50 verändern, wodurch eine Anpassung der Befestigungseinrichtung 10 an unterschiedliche Dachsparrenabstände möglich ist.

Zur Befestigung der Montagebasis 30 an den beiden Dachsparren 20 und 21 sind Befestigungselemente in Form von Winkelteilen 60 und 70 vorhanden, die ein Aufschrauben der Befestigungseinrichtung 10 auf den Dachsparren 20 und 21 ermöglichen. Anstelle der Winkelteile 60 und 70 können auch andere Arten von Befestigungselementen eingesetzt werden.

Zur Anbindung eines Anschlussrohres bzw. Masts 80, das ein Sicherungselement der Absturzsicherungseinrichtung bildet, an der Montagebasis 30 sind Haltemittel 90 vorgesehen, die ein oberes Klemmelement 100 und ein unteres Gegenklemmelement 110 umfassen. Das obere Klemmelement 100 ist mit dem unteren Gegenklemmelement 110 mittels Schraubverbindungen verbunden, die ein Einklemmen der Montagebasis 30 zwischen dem oberen Klemmelement 100 und dem unteren Gegenklemmelement 110 durch Festschrauben ermöglichen. Das Verschrauben zwischen dem Klemmelement 100 und dem Gegenklemmelement 110 erfolgt durch Schrauben 300, die durch Befestigungslöcher im Klemmelement 100 hindurchgeführt und in Gewindelöcher im Gegenklemmelement 110 eingeschraubt sind, um das Klemmelement und das Gegenklemmelement auf der Montagebasis 30 aufzuklemmen. Der Mastfuß 81 des Masts 80 ist an dem Klemmelement 100 angebracht.

In der Figur 1 lassen sich darüber hinaus zwei, jeweils zumindest abschnittsweise mit einem Außengewinde versehene Gewindeelemente in Form zweier Schrauben 310 erkennen, die mittig zur Längsachse des Klemmelements 100 und mittig zur Längsachse der Montagebasis 30 und damit - in Längsrichtung der Montagebasis 30 gesehen - vor und hinter dem Mast 80 angeordnet sind. Die Schrauben 310 erstrecken sich - senkrecht zur Längsachse der Montagebasis 30 - durch das Klemmelement 100 in Richtung auf die Montagebasis 30, beispielsweise auf das Außenrohr 40 wie in Figur 1 gezeigt, und stützen sich entweder auf der Montagebasis 30 ab oder erstrecken sich in ein in der Montagebasis 30 eingebrachtes Loch, insbesondere Bohrloch, hinein.

Die Funktion der Schrauben 310 besteht darin, einen Reib- und/oder Formschluss zwischen dem Klemmelement 100 und der Montagebasis 30 zu erzeugen, der ein Verschwenken des Klemmelements 100 und damit ein Verschwenken des Mastes 80 um die Längsachse der Montagebasis 30 erschwert oder verhindert.

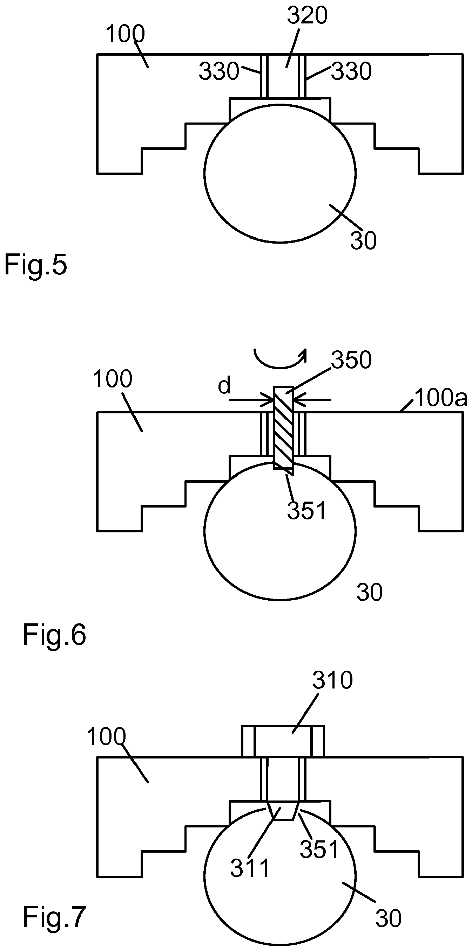

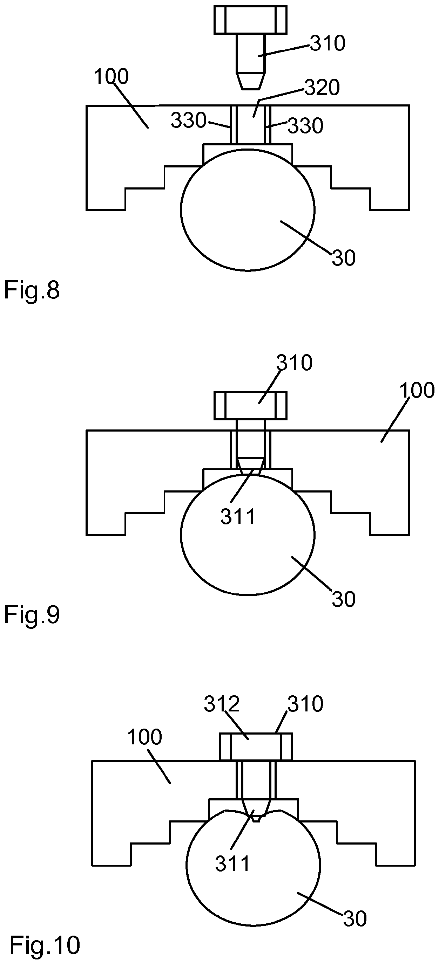

Das Montieren der Befestigungseinrichtung 10 bzw. das Anbringen der Schrauben 310 wird beispielhaft im Zusammenhang mit den Figuren 5 bis 10 näher erläutert; dabei zeigen die Figuren 5 bis 7 eine Ausführungsvariante, bei der die Schrauben 310 in ein Bohrloch in der Montagebasis 30 eingeführt werden und darin eingreifen; die Figuren 8 bis 10 zeigen eine andere Ausführungsvariante, bei der die Schrauben 310 auf die Montagebasis 30 aufgedrückt werden und diese vorzugsweise zumindest außenseitig deformieren.

Die Figur 1 zeigt darüber hinaus eine Anschlusseinrichtung 810 in Form einer Öse, die an dem von den Haltemitteln 90 entfernten Ende des Anschlussrohres 80 - mittelbar oder unmittelbar - angebracht ist. Die Anschlusseinrichtung 810 bzw. die Öse ermöglicht das Anbringen eines externen Sicherungsmittels, beispielsweise eines Hakens oder Seils, mit dem sich eine auf dem Dach befindliche Person vor einem Absturz sichern kann.

Die Anschlusseinrichtung 810 kann an dem Anschlussrohr 80 angeschweißt oder angeschraubt sein. Bei dem Ausführungsbeispiel gemäß Figur 1 ist die Anschlusseinrichtung 810 mit einer Anschlussplatte 820 verschraubt, die an dem Anschlussrohr 80 angeschweißt ist. Bei der Anschlussplatte 820 handelt es sich vorzugsweise um eine eine Bohrung mit Innengewinde aufweisende Gewindescheibe, in die ein mit einem Außengewinde versehener Bolzenabschnitt der Anschlusseinrichtung 810 eingeschraubt ist.

Das Klemmelement 100 und das Gegenklemmelement 110 sind jeweils aus einem einteiligen Metallkörper vorzugsweise durch ein spanabhebendes Verfahren, insbesondere durch Fräsen und/oder Bohren, hergestellt worden. Mit Blick darauf, dass die Außenflächen des Klemmelements und des Gegenklemmelements mit Blick auf eine einfache Montage vorzugsweise parallel oder zumindest möglichst parallel sind, wird es als vorteilhaft angesehen, wenn das Klemmelement 100 und das Gegenklemmelement 110 jeweils aus einem einteiligen quaderförmigen, insbesondere plattenförmigen, Stahlblock durch Materialabtrag hergestellt werden.

Auf der Innenseite des Klemmelements 100 sind Stufen 200 ausgebildet, die oder zumindest deren Stufenkanten 201 nach der Montage des Klemmelements 100 an der Montagebasis 30, beispielsweise - wie in Figur 1 gezeigt - an dem Außenrohr 40, anliegen. Die Stufen 200 erstrecken sich jeweils mit vorzugsweise konstanter Stufenhöhe von einem, in der Figur 1 linken Ende 101 des Klemmelements 100 zu einem in der Figur rechten Ende 102 des Klemmelements 100. Die Erstreckungsrichtung der Stufen 200 entspricht der Längsrichtung des Klemmelements 100 (nachfolgend auch Klemmelementlängsrichtung X genannt) sowie gleichzeitig der Längsrichtung der Montagebasis 30 und damit der Längsrichtung des Außenrohres 40 und des Innenrohres 50.

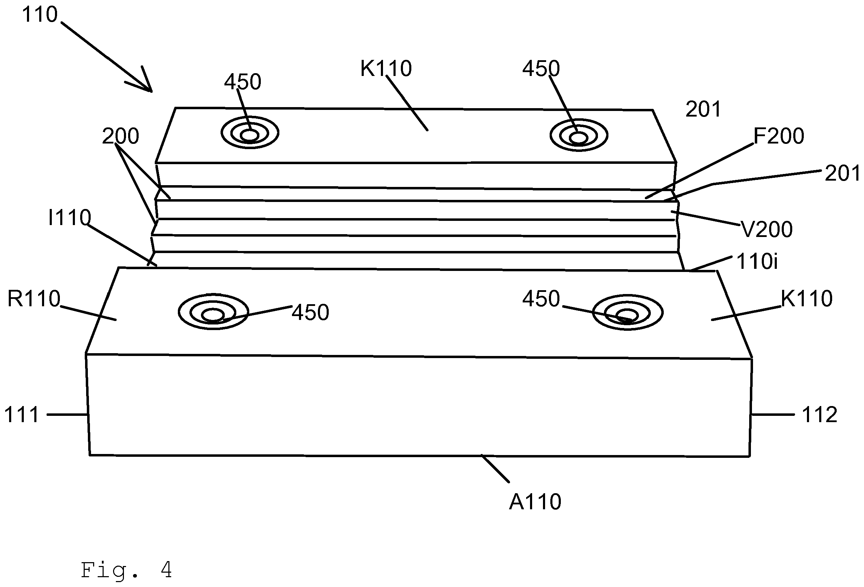

In entsprechender Weise ist auch das Gegenklemmelement 110 mit Stufen versehen, die sich mit vorzugsweise konstanter Stufenhöhe von einem in der Figur 1 linken Ende 111 des Gegenklemmelements 110 entlang der Klemmelementlängsrichtung X bis zu dem anderen Ende 112 des Gegenklemmelements 110 erstrecken; diese Stufen sind in der Figur 1 nicht erkennbar, aber in der Figur 4 dargestellt.

Die Funktion der Stufen 200 bzw. der Stufenkanten 201 der Stufen 200 besteht darin, nach einer Montage des Klemmelements 100 und des Gegenklemmelements 110 an der Montagebasis 30 ein "Einbeißen" der Stufen 200 bzw. Stufenkanten 201 in die Montagebasis 30 bzw. lokal eine plastische Deformation der Montagebasis 30 hervorzurufen, um eine besonders hohe Verdrehsicherheit bzw. Klemmkraft des Klemmelements 100 und des Gegenklemmelements 110 zwecks Verhinderung einer Drehung um die Längsachse der Montagebasis 30 herum zu erreichen.

Besonders vorteilhaft ist es, wenn durch die Stufen 200 eine solche Deformation der Montagebasis 30 erfolgt, dass das Au-ßenrohr 40 lokal auf das Innenrohr 50 aufgepresst wird und eine Klemmverbindung zwischen dem Klemmelement 100, dem Außenrohr 40, dem Innenrohr 50 sowie dem Gegenklemmelement 110 erzielt wird.

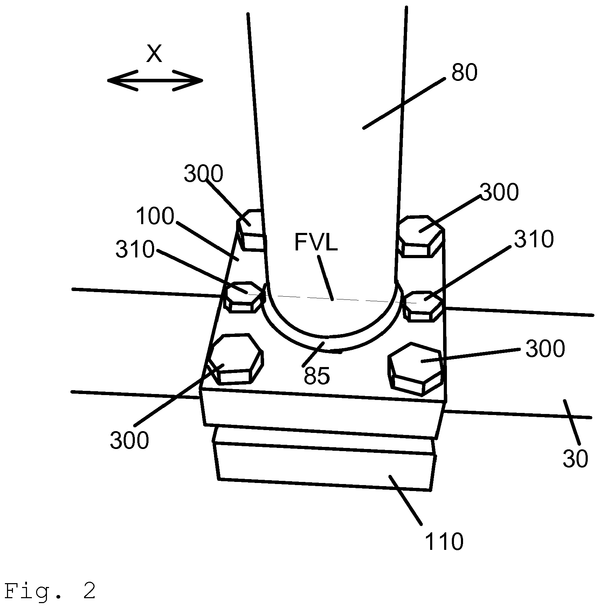

Die Figur 2 zeigt die Haltemittel 90 bzw. das Klemmelement 100 und das Gegenklemmelement 110 nochmals näher im Detail. Es lässt sich das Anschlussrohr 80 erkennen, das an dem Klemmelement 100 angeschraubt und/oder angeschweißt und/oder verklebt sein kann. In der Figur 2 ist eine Schweißnaht 85 angedeutet, die das Klemmelement 100 und das Anschlussrohr 80 verschweißt.

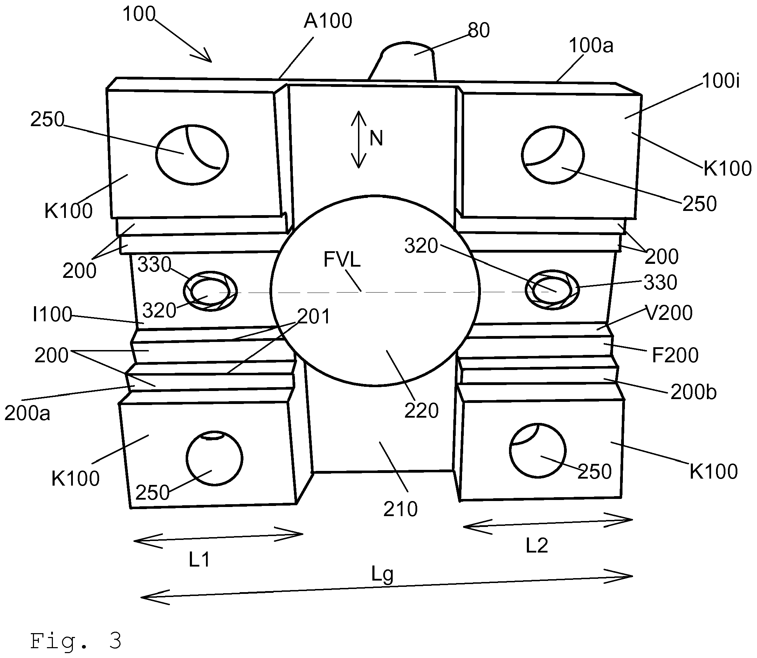

Soll das Anschlussrohr 80 angeschraubt werden, so ist es vorteilhaft, wenn ein in das Anschlussrohr 80 geschnittenes Au-ßengewinde und das quer verlaufende Masteinsetzloch 220 (siehe Figur 3) des Klemmelements ein dazu passendes, eingeschnittenes Innengewinde aufweist.

Darüber hinaus erkennt man die Schrauben 300, die durch Befestigungslöcher im Klemmelement 100 hindurchgeführt und in Gewindelöcher im Gegenklemmelement 110 eingeschraubt sind, um das Klemmelement und das Gegenklemmelement auf der Montagebasis 30 aufzuklemmen.

Die Schrauben 310 sind im Unterschied zu den Schrauben 300 durch das Klemmelement 100 hindurchgeschraubt, um sich auf der Montagebasis 30 abzustützen bzw. in diese einzugreifen, um durch Reib- und/oder Formschluss ein Verdrehen des Mastes 80 um die Längsachse der Montagebasis 30 zu erschweren.

Es lässt sich erkennen, dass die fiktive Verbindungslinie FVL zwischen den zwei Schrauben 310 parallel zur Längsachse der Montagebasis 30 sowie mittig durch den Mittelpunkt des Mastes 80 bzw. mittig durch den Mittelpunkt des Mastfußes und mittig durch die Mitte des Masteinsetzlochs 220 (siehe Figur 3) verläuft. Bei einer vertikalen Ausrichtung des Mastes 80 liegt die fiktive Verbindungslinie FVL vertikal über der Mittenachse der Montagebasis 30.

Die Figur 3 zeigt ein Ausführungsbeispiel für ein Klemmelement 100, das bei der Befestigungseinrichtung gemäß Figur 1 und 2 eingesetzt werden kann, in einer dreidimensionalen Darstellung mit einem Blick auf die Innenseite 100i des Klemmelements 100. Es lassen sich die bereits erwähnten Stufen 200 erkennen, die sich jeweils mit konstanter Stufenhöhe von dem in der Figur 3 linken Ende 101 des Klemmelements 100 entlang der Klemmelementlängsrichtung X zu dem in der Figur 3 rechten Ende 102 des Klemmelements 100 erstrecken.

Die Stufen 200 sind jeweils durch eine quer verlaufende Nut 210 unterbrochen. Die quer verlaufende Nut 210 erstreckt sich senkrecht zur Klemmelementlängsrichtung X des Klemmelements 100 sowie auch senkrecht zur Längsrichtung des Anschlussrohres 80, also in der Figur 3 von oben nach unten. Die quer verlaufende Nut 210 wird vorzugsweise durch Fräsen oder Bohren hergestellt.

Darüber hinaus sind die Stufen 200 des Klemmelements 100 durch ein quer verlaufendes Masteinsetzloch 220 unterbrochen, das sich koaxial zum Anschlussrohr 80 nach außen und somit ebenfalls senkrecht zu den Stufen 200 erstreckt, mit anderen Worten also senkrecht zur Bildebene in Figur 3 und damit auch senkrecht zur Längsrichtung bzw. Nutlängsrichtung N der quer verlaufenden Nut 210. Das quer verlaufende Masteinsetzloch 220 ermöglicht ein Anbringen des Anschlussrohres 80 durch Einschrauben und/oder Ankleben und/oder Anschweißen (siehe Figur 2). Das quer verlaufende Masteinsetzloch 220 wird vorzugsweise durch Fräsen oder Bohren hergestellt.

Durch die quer verlaufende Nut 210 und das quer verlaufende Masteinsetzloch 220 werden die Stufen 200 also jeweils - in Klemmelementlängsrichtung X gesehen - in zwei Stufenabschnitte unterteilt, von denen der in der Figur 3 links liegende Stufenabschnitt mit dem Bezugszeichen 200a und der in der Figur 3 rechts liegende Stufenabschnitt mit dem Bezugszeichen 200b gekennzeichnet ist.

Die Längen der Stufenabschnitte 200a und 200b entlang der Klemmelementlängsrichtung X sind in der Figur 3 mit den Bezugszeichen L1 und L2 gekennzeichnet.

Um eine möglichst große Klemmkraft des Klemmelements 100 auf der Montagebasis 30 gemäß Figur 1 zu ermöglichen, ist die Länge der Stufen 200 entlang der Klemmelementlängsrichtung X möglichst groß. Die Gesamtlänge LL der Stufen 200, die sich bei dem Ausführungsbeispiel gemäß Figur 3 durch die Einzellängen L1 und L2 der Stufenabschnitte 200a und 200b zusammensetzt, beträgt vorzugsweise mindestens 50 % der gesamten Klemmelementlänge Lg in Klemmelementlängsrichtung. Es gilt also vorzugsweise:

$$LL = L1 + L2 \geq K * Lg,$$

wobei K eine Konstante ist, die vorzugsweise mindestens 50 % bzw. mindestens 0,5 beträgt.

Entsprechendes gilt, wenn die Stufen 200 jeweils mehrere Unterbrechungsstellen wie Nuten oder Löcher aufweisen; in diesen Fällen ergibt sich die Gesamtlänge LL der Stufen 200 ebenfalls durch Addition der Einzellängen L1 bis Ln (bei n Einzelängen bzw. n Stufenabschnitten) und es gilt vorzugsweise:

$$LL = L1 + L2 + ... + Ln \geq K * Lg$$

In der Figur 3 lassen sich darüber hinaus Befestigungslöcher 250 erkennen, die ein Hindurchführen der in der Figur 2 gezeigten Schrauben 300 ermöglichen, um das Klemmelement 100 gemäß Figur 3 mit dem Gegenklemmelement 110 gemäß den Figuren 1 und 2 zu verschrauben.

Außerdem erkennt man in der Figur 3 zwei Durchgangslöcher 320, die beidseits des Masteinsetzlochs 220 und - in Längsrichtung der Montagebasis 30 gesehen - vor und hinter dem Masteinsetzloch 220 angeordnet sind; vorzugsweise liegen die Durchgangslöcher 320 auf der Mittenachse des Klemmelements 100, so dass die (fiktive) Verbindungslinie FVL zwischen den beiden Durchgangslöchern 320 nach einer Montage des Klemmelements 100 auf der Montagebasis 30 parallel zur Längsachse der Montagebasis 30 und - bei senkrechter Mastausrichtung - vertikal oberhalb der Längsachse der Montagebasis 30 liegt.

Die Durchgangslöcher 320 weisen jeweils ein Innengewinde 330 auf, das vorzugsweise in die Lochwand des Durchgangslochs 320 im Klemmelement 100 unmittelbar eingeschnitten ist.

Die Durchgangslöcher 320 mit den darin eingeschnittenen Innengewinden 330 ermöglichen das Einschrauben der Schrauben 310, wie dies bereits im Zusammenhang mit den Figuren 1 bis 2 oben erläutert worden ist. Nach einem Aufschrauben der Schrauben 310 erstrecken sich die Schraubenenden bei der Darstellung gemäß Figur 3 aus der Bildebene in Richtung des Betrachters hinaus.

Als besonders vorteilhaft wird es angesehen, wenn die Klemmelementlänge Lg bzw. der Gesamtabstand zwischen den Enden 101 und 102 des Klemmelements 100 zwischen 10 cm und 15 cm beträgt. Bei einer solchen Gesamtlänge des Klemmelements 100 bzw. bei einem solchen Gesamtabstand ist es vorteilhaft, wenn die Gesamtlänge LL der Stufen 200 - abzüglich von Unterbrechungen wie beispielsweise der quer verlaufenden Nut 210 und des quer verlaufenden Masteinsetzlochs 220 in der Figur 3 - jeweils mindestens 6 cm beträgt.

Besonders vorteilhaft ist es, wenn sich die Stufen 200 des Klemmelements 100 über eine Länge zwischen 3 cm und 6 cm von dem Ende 101 des Klemmelements 100 bis zur quer verlaufenden Nut 210 bzw. zum quer verlaufenden Masteinsetzloch 220 und über eine Länge zwischen 3 cm und 6 cm von der quer verlaufenden Nut 210 bzw. dem quer verlaufenden Masteinsetzloch 220 zu dem anderen Ende 102 des Klemmelements 100 erstrecken.

Die Figur 4 zeigt ein Ausführungsbeispiel für ein Gegenklemmelement 110, das bei der Befestigungseinrichtung gemäß Figur 1 und 2 sowie der Befestigungseinrichtung gemäß Figur 5 eingesetzt werden kann, näher im Detail in einer dreidimensionalen Darstellung schräg von der Seite. Es lassen sich Stufen 200 erkennen, die durch Materialabtrag auf der Innenseite 110i des Gegenklemmelements 110 herausgearbeitet worden sind und sich jeweils mit vorzugsweise konstanter Stufenhöhe von dem in der Figur 4 linken Ende 111 entlang der Klemmelementlängsrichtung X zu dem in der Figur 4 rechten Ende 112 des Gegenklemmelements 110 erstrecken.

Besonders vorteilhaft ist es, wenn sich die Stufen 200 bei dem Gegenklemmelement 110 unterbrechungsfrei zwischen den beiden Enden 111 und 112 erstrecken.

Falls Nuten oder Unterbrechungen die Stufen in dem Gegenklemmelement 110 unterbrechen, so ist es vorteilhaft, wenn zumindest die Gesamtlänge einer jeden Stufe, die sich durch die Einzellängen der resultierenden Stufenabschnitte ergibt (siehe Ausführungen oben im Zusammenhang mit der Figur 3 und den Stufen im Klemmelement 100), jeweils zumindest 50 % des Gesamtabstands zwischen den beiden Enden 111 und 112 des Gegenklemmelements beträgt.

Die Länge Lg des Gegenklemmelements 110 entlang der Klemmelementlängsrichtung X bzw. der Gesamtabstand zwischen den beiden Enden 111 und 112 des Gegenklemmelements 110 beträgt vorzugsweise zwischen 10 und 15 cm.

Im Randbereich R110 des Gegenklemmelements 110 sind vorzugsweise Gewindelöcher 450 vorhanden, die von ihrer Anordnung her mit den Befestigungslöchern 250 im Klemmelement 100 fluchten, sobald das Klemmelement und das Gegenklemmelement bestimmungsgemäß verschraubt werden. Die Gewindelöcher 450 sind somit geeignet, ein Einschrauben der Schrauben 300 gemäß Figur 2 und damit ein Verschrauben des Gegenklemmelements 110 mit dem Klemmelement 100 gemäß Figur 2 zu ermöglichen. Die Gewindelöcher 450 sind durch ein Gewindeschneideverfahren in das Gegenklemmelement 110 eingeschnitten.

Wie bereits oben erwähnt, werden das Klemmelement 100 und das Gegenklemmelement 110 vorzugsweise jeweils aus einem einteiligen quaderförmigen, insbesondere plattenförmigen, Stahlblock durch Materialabtrag hergestellt. Mit Blick auf eine einfache Herstellung wird es als vorteilhaft angesehen, wenn bei dem Klemmelement 100 die Stufenflächen F200 der Stufen 200 nach dem Materialabtrag parallel zur am weitesten innenliegenden Innenfläche I100 des Klemmelements, parallel zur Außenfläche A100, an der das Anschlussrohr angebracht ist, und parallel zu den Anschlussflächen K100, durch die die Befestigungslöcher 250 hindurchgeführt sind, liegen.

Bei dem Gegenklemmelement 110 liegen die Stufenflächen F200 der Stufen 200 nach dem Materialabtrag dementsprechend ebenfalls vorzugsweise parallel zur innenliegenden Innenfläche I110 des Gegenklemmelements 110, parallel zur Außenfläche A110 des Gegenklemmelements 110 und parallel zu den Anschlussflächen K110, in die die Gewindelöcher 450 eingeschnitten sind.

Nach der Montage und dem Verschrauben von Klemmelement 100 und Gegenklemmelement 110 ergibt sich somit vorzugsweise, dass die Stufenflächen F200 aller Stufen 200 des Klemmelements 100 und des Gegenklemmelements 110

- parallel zur innenliegenden Innenfläche I100 des Klemmelements 100,
- parallel zur Außenfläche A100 des Klemmelements 100,
- parallel zu den Anschlussflächen K100, durch die die Befestigungslöcher 250 hindurchgeführt sind,
- parallel zur innenliegenden Innenfläche I110 des Gegenklemmelements 110,
- parallel zur Außenfläche A110 des Gegenklemmelements 110 und
- parallel zu den Anschlussflächen K110, in die die Gewindelöcher 450 eingeschnitten sind,

liegen.

An den Stufenkanten 201 sind die Stufen 200 vorzugsweise jeweils rechtwinklig; an die oberen Stufenflächen F200 schließt sich somit also vorzugsweise jeweils eine dazu senkrechte Stufenfläche V200 an, die bei dem Klemmelement 100 jeweils

- senkrecht zur innenliegenden Innenfläche I100 des Klemmelements 100,

- senkrecht zur Außenfläche A100 des Klemmelements 100 und

- senkrecht zu den Anschlussflächen K100, durch die die Befestigungslöcher 250 hindurchgeführt sind,

liegt.

Bei dem Gegenelement 110 liegen die senkrechten Stufenflächen V200

- senkrecht zur innenliegenden Innenfläche I110 des Gegenklemmelements 110,

- senkrecht zur Außenfläche A110 des Gegenklemmelements 110 und

- senkrecht zu den Anschlussflächen K110, in die die Gewindelöcher 450 eingeschnitten sind.

Nach der Montage des Klemmelements 100 und des Gegenklemmelements 110 ergibt sich damit in vorteilhafter Weise eine Konfiguration, bei der alle senkrechten Stufenflächen V200 des Klemmelements 100 und des Gegenklemmelements 110 jeweils

- senkrecht zur innenliegenden Innenfläche I100 des Klemmelements 100,

- senkrecht zur Außenfläche A100 des Klemmelements 100,

- senkrecht zu den Anschlussflächen K100 des Klemmelements 100, durch die die Befestigungslöcher 250 hindurchgeführt sind,

- senkrecht zur innenliegenden Innenfläche I110 des Gegenklemmelements 110,

- senkrecht zur Außenfläche A110 des Gegenklemmelements 110 und

- senkrecht zu den Anschlussflächen K110 des Gegenklemmelements 110, in die die Gewindelöcher 450 eingeschnitten sind, liegen.

Im Zusammenhang mit den Figuren 5 bis 7 soll nachfolgend ein bevorzugtes Verfahren zum Montieren der Haltemittel 90, insbesondere des Klemmelements 100, auf der Montagebasis 30 erläutert werden.

Die Figur 5 zeigt in einem Querschnitt die Montagebasis 30 mit dem darauf aufgesetzten Klemmelement 100. Es lässt sich eines der beiden Durchgangslöcher 320 mit dem darin eingeschnittenen Innengewinde 330 erkennen.

Um in der Montagebasis 30 ein Bohrloch einzubringen, durch das nachfolgend ein Schraubenende einer einzuschraubenden Schraube 310 eindringen kann, wird zunächst mit einem Bohrer 350 ein Bohrloch 351 in die Montagebasis 30, also - je nach Lage des Klemmelements 100 in Längsrichtung der Montagebasis - nur in das Außenrohr 40, nur in das Innenrohr 50 oder in beide Rohre 40 und 50, gebohrt. Der Bohrerdurchmesser d des Bohrers 350 ist dabei vorzugsweise derart gewählt, dass der Bohrerdurchmesser kleiner als der Innendurchmesser des in das Durchgangsloch 320 eingeschnittenen Innengewindes 330 ist, um während des Bohrens eine Beschädigung des Innengewindes 330 zu vermeiden oder die Beschädigungsgefahr bzw. den Beschädigungsumfang zu minimieren. Das Bohren des Bohrlochs 351 in die Montagebasis 30 von der Außenseite 100a des Klemmelements 100 durch das Durchgangsloch 320 hindurch ist in der Figur 6 gezeigt.

Erfinderseitige Tests haben gezeigt, dass bei einem nominal 12 mm Durchgangsloch (Durchmesser des Innengewindes üblicherweise 10,25 mm), das zum Einschrauben von 12 mm Schrauben geeignet ist, ohne Weiteres ein Bohrer mit einem Bohrerdurchmesser von d = 10 mm eingesetzt werden kann, ohne dass es - auch im Falle eines Einsatzes einer einhändig betriebenen Handbohrmaschine auf einem Dach - zu einer signifikanten Beschädigung des Innengwindes 330 kommt. Sind kleinere oder größere Durchgangslöcher 320 und Innengewinde 330 vorhanden, so ist der Bohrerdurchmesser entsprechend anzupassen; in der Regel reicht es aus, wenn der Bohrerdurchmesser circa 0,25 mm kleiner als der Innendurchmesser des Innengewindes ist.

Die Figur 7 zeigt das Klemmelement 100 sowie die Montagebasis 30, nachdem eine Schraube 310 in das Innengewinde 330 hinein geschraubt und damit abschnittsweise durch das Durchgangsloch 320 hindurch geführt worden ist. Ein Schraubenende 311 dringt bei dem Einschrauben der Schraube 310 in das Bohrloch 351 ein und führt zu einem Formschluss zwischen der Schraube 310, dem Klemmelement 100 und der darunter befindlichen Montagebasis 30.

Um ein Eindringen der Schraube 310 in das Bohrloch 351 zu vereinfachen, wird es als vorteilhaft angesehen, wenn sich die Schraube zu ihrem Schraubenende 311 hin verjüngt; ein solches Verjüngen kann beispielsweise auf einem konischen oder kegelstumpfförmigen Zulaufen des Schraubenendes 311 beruhen, wie dies beispielhaft in der Figur 7 gezeigt ist.

Anstelle eines konischen Zulaufens des Schraubenendes 311 kann auch eine andere Form der Verjüngung vorgesehen sein, beispielsweise kann der vordere Abschnitt der Schraube 310 partiell weggefräst oder (mittels einer Drehmaschine) weggedreht sein, um eine Durchmesserreduktion, insbesondere ein spitzes Zulaufen des Schraubenendes 311 zu erreichen. Mit anderen Worten ist es vorteilhaft, wenn die Schraube 310 nach vorn angespitzt ist und spitzer zum Schraubenende ausläuft als übliche Schrauben.

Im Zusammenhang mit den Figuren 8 bis 10 wird nachfolgend eine alternative Vorgehensweise beim Montieren des Klemmelements 100 auf der Montagebasis 30 gezeigt. Im Unterschied zu dem Ausführungsbeispiel gemäß den Figuren 5 bis 7 wird auf ein Bohren eines Bohrlochs 351 in der Montagebasis 30 verzichtet. Stattdessen wird eine Schraube 310 unmittelbar durch das Durchgangsloch 320 hindurch geschraubt, so dass sich das Schraubenende 31 auf der Montagebasis 30 abstützt. Das Abstützen des Schraubenendes 311 auf der Montagebasis 30 ist in der Figur 9 gezeigt.

Reicht eine reibschlüssige Verbindung zwischen der Schraube 310 und der Montagebasis 30 aus, um die zu einem Halten des Mastes 80 nötigen Haltekräfte zu erzeugen, so kann es bei einem Einschrauben wie in der Figur 9 gezeigt bleiben.

Sollen die Haltekräfte des Mastes 80 an der Montagebasis 30 darüber hinaus erhöht werden, so kann vorgesehen sein, dass die Schraube 310 und das Schraubenende 311 noch tiefer in das Klemmelement 100 hinein geschraubt werden, so dass das Schraubenende 311 die Oberfläche der Montagebasis 30 partiell verformt. Eine solche Vorgehensweise ist in der Figur 10 gezeigt. Die Schraube 310 ist soweit eingeschraubt, dass der Schraubenkopf 312 auf der Außenseite 100a des Klemmelements 100 aufliegt.

Durch das Verformen der Montagebasis 30 wird ein Formschluss zwischen der Schraube 310, dem Klemmelement 100 und der darunter befindlichen Montagebasis 30 erzeugt, so dass die Haltekraft des Mastes 80 an der Montagebasis 30 gegenüber dem in Figur 9 gezeigten Zustand deutlich erhöht wird.

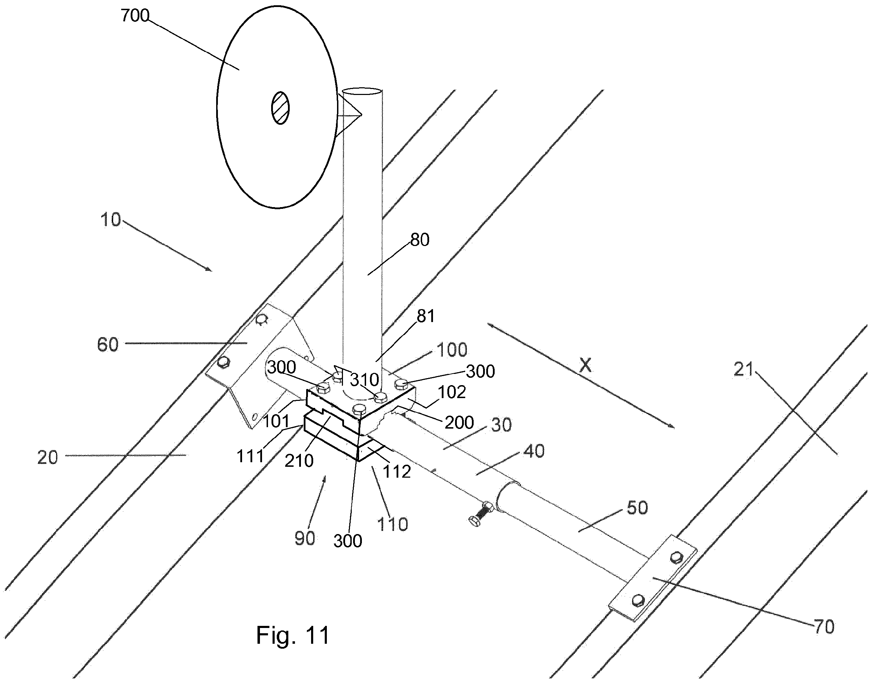

Die Figur 11 zeigt ein Ausführungsbeispiel für eine Befestigungseinrichtung 10, bei der es sich um einen Antennenhalter handelt. Die Befestigungseinrichtung 10 gemäß Figur 11 kann vom Aufbau her mit der Befestigungseinrichtung 10 gemäß Figur 1 weitgehend baugleich sein, Unterschiede bestehen bei der Variante gemäß Figur 11 u. a. darin, dass bei der Befestigungseinrichtung 10 gemäß Figur 11 die in der Figur 1 dargestellte Anschlusseinrichtung 810 sowie die in der Figur 1 dargestellte Anschlussplatte 820 fehlen können und dass an dem Anschlussrohr 80 eine Antenne 700, bei der es sich beispielsweise um eine Satellitenantenne handeln kann, angebracht ist.

Mit anderen Worten können die Montagebasis 30 (mit dem Außenrohr 40 und dem Innenrohr 50), die Winkelteile 60 und 70 und die Haltemittel 90 mit dem oberen Klemmelement 100 und dem unteren Gegenklemmelement 110 bei der Befestigungseinrichtung 10 gemäß Figur 11 mit den entsprechenden Komponenten der Befestigungseinrichtung 10 gemäß Figur 1 bzw. den Komponenten gemäß den Figuren 2 bis und 4 identisch sein. Bezüglich der Ausgestaltung dieser Komponenten sei deshalb auf die obigen Ausführungen im Zusammenhang mit den Figuren 1 bis 4 verwiesen.

Um ein Eindringen von Wasser in das Anschlussrohr 80 zu vermeiden, kann auf dem der Montagebasis 30 abgewandten Ende des Rohres 80 ein Verschlussdeckel oder dergleichen angebracht sein.

Ergänzend sei erwähnt, dass die quer verlaufende Nut 210 in dem Klemmelement (siehe Figur 3) im Falle eines Einsatzes der Befestigungseinrichtung 10 als Antennenhalter in vorteilhafter Weise zum Hindurchführen eines Antennenkabels genutzt werden kann, das von der Antenne 700 durch das Innere des Anschlussrohres 80 und nach Umbiegen um 90 Grad durch die quer verlaufende Nut 210 hindurch nach außen geführt werden kann.

Im Falle eines Einsatzes der Befestigungseinrichtung 10 als Absturzsicherung (siehe Figuren 1 und 2) kann die quer verlaufende Nut 210 (siehe Figur 3) im Klemmelement 100 im Übrigen auch entfallen (siehe Darstellung in den Figuren 1 und 2), wodurch der Herstellungsaufwand beim Herstellen des Klemmelements 100 reduziert wird.

Die beiden Gewindeelemente in Form der beiden Schrauben 310 dienen auch bei der Befestigungseinrichtung 10 gemäß Figur 11 dazu, sich auf der Montagebasis 30 abzustützen oder in die Montagebasis 30 einzudringen, um ein Verschwenken des Mastes 80 bzw. des Klemmelements 100 um die Längsachse der Montagebasis 30 zu erschweren oder zu verhindern.

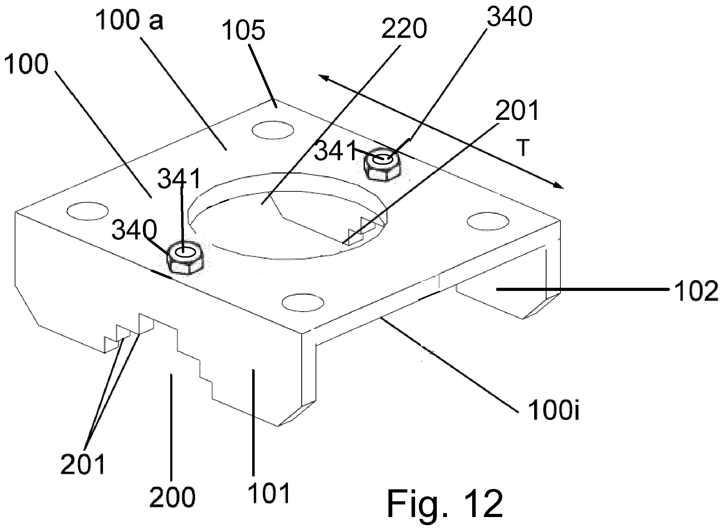

Die Figur 12 zeigt ein weiteres Ausführungsbeispiel für ein Klemmelement 100, das bei der Befestigungseinrichtung 10 gemäß den Figuren 1 und 11 anstelle der dort gezeigten Klemmelemente 100 eingesetzt werden kann. Man erkennt, dass das Klemmelement 100 zwei parallele Endabschnitte 101 und 102 aufweist, die sich in einem Winkel (90° oder zumindest näherungsweise 90°) von der Innenseite 100i einer Trägerplatte 105 des Klemmelements 100 in Richtung auf das Außenrohr 40 der Montagebasis 30 (siehe Figuren 1 und 11) erstrecken.

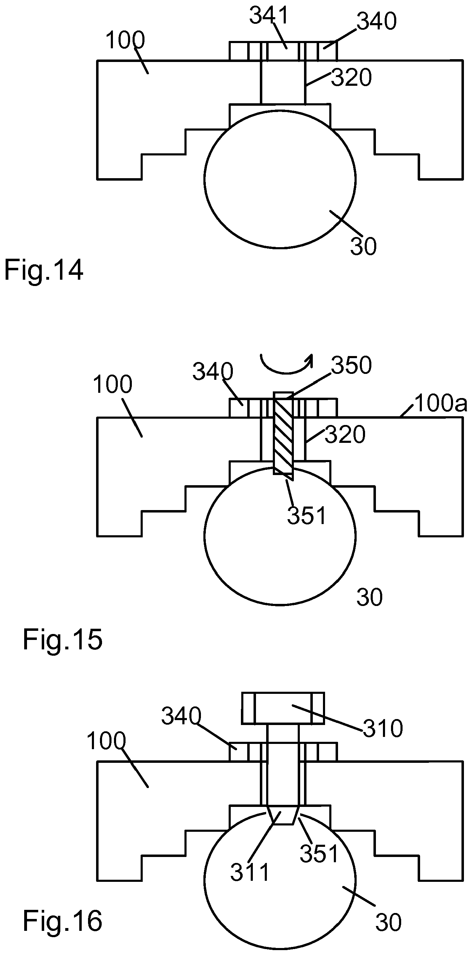

In der Figur 12 lässt sich darüber hinaus erkennen, dass auf der Außenseite 100a des Klemmelements 100, und zwar auf der Außenseite der Trägerplatte 105, zwei Muttern 340 aufgebracht, insbesondere aufgeklebt, aufgeschweißt, aufgelötet oder aufgeklemmt sind. Die Innenlöcher 341 der beiden Muttern 340 bzw. die Innengewinde der beiden Muttern 340 fluchten mit Durchgangslöchern 320, die in der Trägerplatte 105 des Klemmelements eingebracht, insbesondere eingebohrt, eingefräst oder eingestanzt worden sind; die Durchgangslöcher 320 sind in der Figur 12 von den darüber befindlichen Muttern 340 verdeckt und somit nicht erkennbar; sie sind jedoch in den Figuren 14 bis 16 dargestellt.

Die beiden Muttern 340 und die darunter befindlichen Durchgangslöcher 320 ermöglichen ein Einschrauben von Schrauben 310, wie dies im Zusammenhang mit den Figuren 1 bis 11 oben bereits erläutert worden ist. Durch ein Einschrauben von Schrauben 310 wird es möglich, das jeweilige Schraubenende 311 auf der Montagebasis 30 aufzusetzen (vgl. Figur 9), in diese einzudrücken (vgl. Figur 10) oder in diese einzuführen (vgl. Figur 7).

Das Klemmelement 100 mit Ausnahme der Muttern 340, also mit anderen Worten die Trägerplatte 105 mit den beiden parallelen Endabschnitten 101 und 102, kann durch ein einteiliges Grundbauteil, beispielsweise ein Gussteil oder ein Strangpressprofilteil, gebildet sein, auf dessen Trägerplatte 105 die beiden Muttern 340 aufgebracht werden.

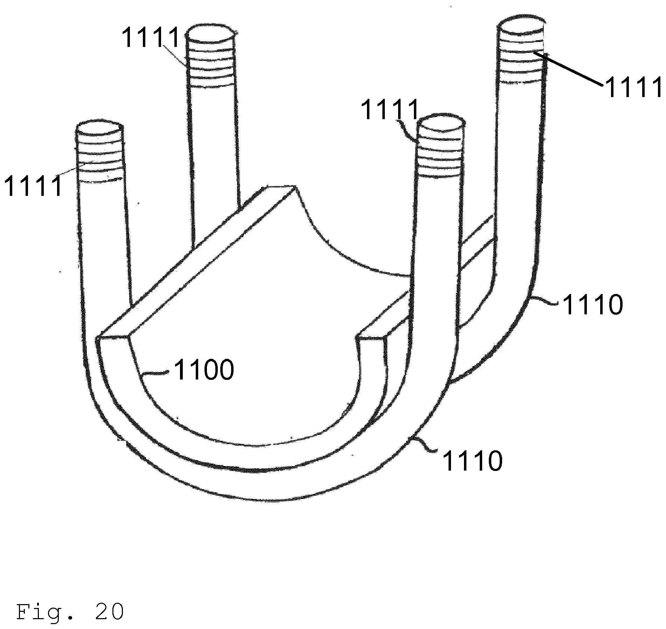

Das Klemmelement 100 kann auch als Gegenklemmelement 110 eingesetzt werden; in diesem Falle wird das Masteinsetzloch 220, das bei dem Klemmelement 100 für die Montage des Masts 80 vorgesehen ist, aus Stabilitätsgründen vorzugsweise weggelassen. Alternativ kann als Gegenklemmelement auch ein rinnenförmiges Element, wie in Figur 20 gezeigt, eingesetzt werden.

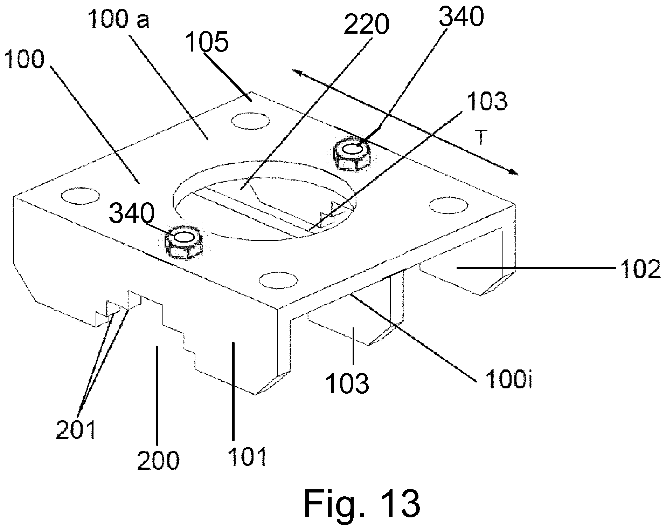

Die Figur 13 zeigt ein weiteres Ausführungsbeispiel für ein Klemmelement 100, das bei der Befestigungseinrichtung 10 gemäß den Figuren 1 und 11 anstelle der dort gezeigten Klemmelemente 100 eingesetzt werden kann.

Mittig zwischen den beiden parallelen Endabschnitten 101 und 102 befindet sich bei dem Ausführungsbeispiel gemäß Figur 13 ein Stützelement 103, das durch eine Platte gebildet ist. Das Stützelement 103 bzw. die Platte erstreckt sich in einem rechten Winkel von der Innenseite 100i des Klemmelements 100 bzw. von der Innenseite der Trägerplatte 105 des Klemmelements 100 in Richtung der Montagebasis 30 und stützt sich auf dieser ab.

Auch bei dem Ausführungsbeispiel gemäß Figur 13 weist das Klemmelement 100 auf seiner Trägerplatte 105 zwei Muttern 340 auf, die von ihrer Anordnung und ihrer Funktion her den Muttern 340 bei dem Ausführungsbeispiel gemäß Figur 12 entsprechen; diesbezüglich sei daher auf die obigen Ausführungen im Zusammenhang mit der Figur 12 verwiesen.

Das Klemmelement 100 einschließlich des Stützelements 103 - jedoch mit Ausnahme der Muttern 340 - kann durch ein einteiliges Grundbauteil, beispielsweise ein Gussteil oder ein Strangpressprofilteil, gebildet sein, auf dessen Trägerplatte 105 die beiden Muttern 340 aufgebracht werden. Alternativ kann das Stützelement 103 durch eine separate Platte gebildet sein, die an der Innenseite der Trägerplatte 105 angebracht, insbesondere angeschweißt wird.

Das Klemmelement 100 kann auch als Gegenklemmelement 110 eingesetzt werden; in diesem Falle wird das Masteinsetzloch 220, das bei dem Klemmelement 100 für die Montage des Masts 80 vorgesehen ist, aus Stabilitätsgründen vorzugsweise weggelassen.

Die Figuren 14 bis 16 zeigen beispielhaft, wie sich das Klemmelement 100 gemäß den Figuren 12 und 13 montieren lässt. Zunächst wird, wie die Figur 14 zeigt, das Klemmelement 100 auf die Montagebasis 30 aufgesetzt. Nachfolgend wird - wie die Figur 15 zeigt - mittels eines Bohrers 350 ein Bohrloch 351 in die Montagebasis 30 gebohrt. Der Außendurchmesser des Bohrers 350 ist vorzugsweise kleiner als der Innendurchmesser der Mutter 340 bzw. der Innendurchmesser des Innengewindes der Mutter 340, um eine Gewindebeschädigung zu vermeiden.

Nach dem Bohren des Bohrlochs 351 kann eine Schraube 310 durch die Mutter 340 hindurch geschraubt werden kann, wobei ein Schraubenende 311 der Schraube 310 in die Montagebasis 30 eingeführt wird (siehe Figur 16).

Die Figuren 14 bis 16 zeigen, dass das Durchgangsloch 320 in der Trägerplatte 105 und das in der Mutter 340 vorgesehene Innengewinde in Lochlängsrichtung beabstandet sind; die Anordnung der Mutter 340 und dem Durchgangsloch 320 ist vorzugsweise fluchtend bzw. koaxial.

Alternativ ist es möglich, auf das Bohren eines Bohrlochs 351 zu verzichten, und die Schraube 310 unmittelbar in die Mutter 340 einzuschrauben; in diesem Fall wird sich das Schraubenende 311 auf der Montagebasis 30 abstützen, wie dies beispielhaft in der Figur 9 gezeigt ist, oder in die Oberfläche eindringen, wie dies beispielhaft in der Figur 10 gezeigt ist; diesbezüglich sei auf die obigen Ausführungen im Zusammenhang mit den Figuren 9 und 10 verwiesen.

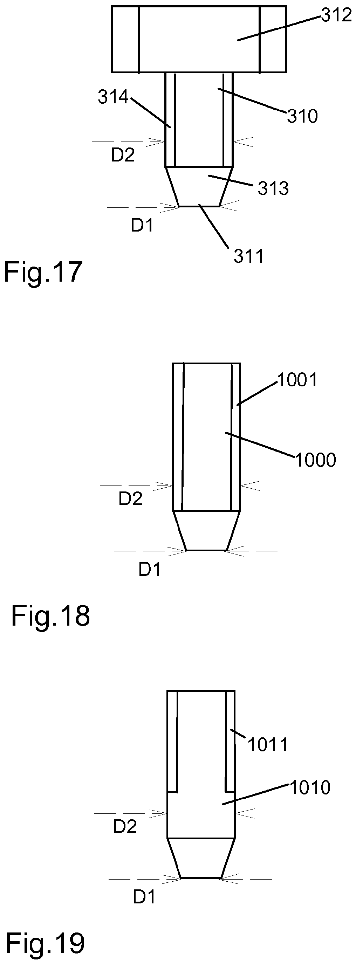

Im Zusammenhang mit den Figuren 1 bis 16 werden oben Ausführungsbeispiele erläutert, bei denen als zumindest abschnittsweise mit einem Außengewinde versehene Gewindeelemente Schrauben 310 eingesetzt werden. Die Figur 17 zeigt ein Ausführungsbeispiel für eine solche Schraube 310 nochmals näher im Detail.

Die Schraube 310 gemäß Figur 17 weist einen sich konisch oder kegelstumpfartig zum Schraubenende 311 hin verjüngenden Kegelstumpfabschnitt 313 auf, dessen Durchmesser D1 am vorderen Kegelstumpfende bzw. am Schraubenende 311 vorzugsweise maximal 80 %, bevorzugt maximal 70 % und besonders bevorzugt maximal 50 % des Durchmessers D2 im Bereich des Außengewindes 314 der Schraube 310 beträgt.

Alternativ können bei den Befestigungseinrichtungen gemäß den Figuren 1 bis 16 im Übrigen auch andere Arten von Gewindeelementen eingesetzt werden, beispielsweise nach vorn angespitzte oder sich zumindest nach vorn verjüngende und ein Außengewinde 1001 aufweisende Gewindestangen 1000 mit D2 > D1 (vgl. Figur 18) oder nach vorn spitz zulaufende oder sich nach vorn verjüngende Bolzen 1010 mit D2 > D1, die in zumindest einem Bolzenabschnitt ein Außengewinde 1011 aufweisen (vgl. Figur 19).

Bei den obigen Ausführungsbeispielen gemäß den Figuren 1 bis 19 kann im Übrigen als Gegenklemmelement auch ein rinnenartiges Element eingesetzt werden, wie es in der Figur 20 beispielhaft gezeigt ist. Das rinnenartige Element umfasst eine Rinne 1100 und zwei gebogene Gewindestangen 1110, die endseitig Gewinde 1111 aufweisen. Die Gewinde 1111 werden beispielsweise mit Muttern verschraubt, die auf der Außenseite des Klemmelements 100 zur Auflage kommen.

Bei den obigen Ausführungsbeispielen gemäß den Figuren 1 bis 20 kann anstelle der dort gezeigten zwei Gewindeelemente bzw. zwei Schrauben 310, die sich auf der Montagebasis 30 abstützen oder in diese eingeführt sind, auch nur ein einziges Gewindeelement bzw. nur eine einzige Schraube 310 eingesetzt werden; die Haltekraft der Haltemittel 90 an der Montagebasis 30 würde sich entsprechend reduzieren. Soll eine besonders große Haltekraft der Haltemittel 90 an der Montagebasis 30 erreicht werden, so können auch mehr als zwei, beispielsweise drei oder vier, Gewindeelemente bzw. Schrauben 310 eingesetzt werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, wie von den Ansprüchen definiert, zu verlassen.

Bezugszeichenliste

| 10 | Befestigungseinrichtung |
| 20 | Dachsparren |
| 21 | Dachsparren |
| 30 | Montagebasis |
| 40 | Außenrohr |
| 50 | Innenrohr |
| 60 | Winkelteil |
| 70 | Winkelteil |
| 80 | Anschlussrohr / Mast |
| 81 | Mastfuß |
| 85 | Schweißnaht |
| 90 | Haltemittel |
| 100 | Klemmelement |
| 100a | Außenseite |
| 100i | Innenseite |
| 101 | Ende |
| 102 | Ende |
| 103 | Stützelement |
| 110 | Gegenklemmelement |
| 110i | Innenseite |
| 105 | Trägerplatte |
| 111 | Ende |
| 112 | Ende |
| 200 | Stufen |
| 200a | Stufenabschnitt |
| 200b | Stufenabschnitt |
| 201 | Stufenkante |
| 210 | Nut |
| 220 | Masteinsetzloch |
| 250 | Befestigungslöcher |
| 300 | Schrauben |
| 310 | Gewindeelement in Form einer Schraube |
| 311 | Schraubenende |
| 312 | Schraubenkopf |
| 313 | Kegelstumpfabschnitt |
| 314 | Außengewinde |
| 320 | Durchgangsloch |
| 330 | Innengewinde |
| 340 | Mutter |
| 341 | Innenloch der Mutter |
| 350 | Bohrer |
| 351 | Bohrloch |
| 450 | Gewindelöcher |
| 700 | Antenne |
| 810 | Anschlusseinrichtung |
| 820 | Anschlussplatte |
| 1000 | Gewindestange |
| 1001 | Außengewinde |
| 1010 | Bolzen |
| 1011 | Außengewinde |
| 1100 | Rinne |

| | |
|---|---|
| 1110 | Gewindestange |
| 1111 | Außengewinde |
| | |
| A100 | Außenfläche |
| A110 | Außenfläche |
| d | Bohrerdurchmesser |
| D1 | Durchmesser |
| D2 | Durchmesser |
| F200 | Stufenfläche |
| FVL | fiktive Verbindungslinie |
| I100 | innenliegende Innenfläche |
| I110 | innenliegende Innenfläche |
| K100 | Anschlussfläche |
| K110 | Anschlussfläche |
| Lg | Klemmelementlänge |
| LL | Stufengesamtlänge |
| L1 | Länge |
| L2 | Länge |
| N | Nutlängsrichtung |
| R110 | Randbereich |
| T | Breite des Klemmelements quer zur Längsrichtung der Montagebasis |
| V200 | Stufenfläche |
| X | Klemmelementlängsrichtung |

**Patentansprüche**

1. Befestigungseinrichtung (10) zur Befestigung eines Masts (80) an benachbarten Dachsparren (20, 21) eines Daches mit einer Montagebasis (30), dem erwähnten Mast (80) und Haltemitteln (90) zur Befestigung des Mastes (80) an der Montagebasis (30),

   - wobei die Montagebasis (30) wenigstens zwei ineinandergreifende Schiebeelemente, und zwar ein Außenelement, das durch ein Außenrohr (40) gebildet ist, und ein Innenelement, das durch ein in das Außenrohr (40) eingreifendes Innenrohr (50) oder eine in das Außenrohr (40) eingreifende Stange gebildet ist, umfasst,
   - wobei die Haltemittel (90) ein Klemmelement (100) und ein Gegenklemmelement (110) aufweisen, die derart miteinander verbindbar sind, dass das Klemmelement (100) und das Gegenklemmelement (110) einen Abschnitt der Montagebasis (30) einklemmen, und
   - wobei der Mastfuß (81) an dem Klemmelement (100) angebracht ist,
   - wobei mindestens ein zumindest abschnittsweise mit einem Au-ßengewinde (314, 1001, 1011) versehenes Gewindeelement (310, 1000, 1010) vorhanden ist und
   - wobei die Haltemittel (90), insbesondere das Klemmelement (100) und/oder das Gegenklemmelement (110), im Bereich der eingeklemmten Montagebasis (30) ein Durchgangsloch (320) und ein zugeordnetes Innengewinde (330) aufweisen,

   **dadurch gekennzeichnet, dass**

   - durch das Durchgangsloch (320) das mit dem Innengewinde (330) verschraubte Gewindeelement (310, 1000, 1010) nach innen in Richtung auf die Montagebasis hindurchragt und sich auf der Außenseite der Montagebasis abstützt oder mit einem hineinragenden Ende in ein Loch in der Montagebasis hineinragt.

2. Befestigungseinrichtung nach Anspruch 1,
   **dadurch gekennzeichnet, dass**
   sich das Gewindeelement (310, 1000, 1010) zu seinem auf der Montagebasis aufliegenden oder in dieses hineinragenden Ende hin verjüngt.

3. Befestigungseinrichtung nach einem der voranstehenden Ansprüche,
   **dadurch gekennzeichnet, dass**

- das Gewindeelement (310, 1000, 1010) in ein Loch in der Montagebasis hineinragt und
- der Durchmesser des Gewindeelements (310, 1000, 1010) im Bereich seines vorderen in die Montagebasis hineinragenden Endes maximal 80% des Durchmessers beträgt, den der mit dem Innengewinde (330) verschraubte Abschnitt des Gewindeelements (310, 1000, 1010) aufweist.

4. Befestigungseinrichtung nach einem der voranstehenden Ansprüche,
**dadurch gekennzeichnet, dass**
das Innengewinde (330) in dem Durchgangsloch (320) ausgebildet, insbesondere in dieses hineingeschnitten oder hineingepresst, ist.

5. Befestigungseinrichtung nach einem der voranstehenden Ansprüche 1 bis 4,
**dadurch gekennzeichnet, dass**
das Klemmelement und/oder das Gegenklemmelement ein das Innengewinde (330) tragendes Innengewindeelement, insbesondere in Form einer Mutter (340), aufweist, das an der Außenseite oder der Innenseite des Klemmelements bzw. Gegenklemmelements angebracht ist und mit dem Durchgangsloch (320) überlappt, insbesondere fluchtet.

6. Befestigungseinrichtung nach einem der voranstehenden Ansprüche,
**dadurch gekennzeichnet, dass**
das Gewindeelement (310, 1000, 1010) eine Schraube (310) ist, deren Schraubenkopf (312) auf der Außenseite (100a) der Haltemittel (90), insbesondere der Außenseite des Klemmelements und/oder des Gegenklemmelements, zugänglich ist.

7. Befestigungseinrichtung nach einem der voranstehenden Ansprüche,
**dadurch gekennzeichnet, dass**

- das Klemmelement (100) und/oder das Gegenklemmelement (110) aus einem einteiligen Metallkörper besteht,
- wobei auf der Innenseite des Klemmelements (100) und/oder des Gegenklemmelements (110) Stufen (200) ausgebildet sind, die oder zumindest deren Stufenkanten (201) nach der Montage des Klemmelements (100) und/oder des Gegenklemmelements (110) an der Montagebasis (30) anliegen.

8. Befestigungseinrichtung nach Anspruch 7,
**dadurch gekennzeichnet, dass**
das Klemmelement (100) und/oder das Gegenklemmelement (110) aus einem einteiligen quaderförmigen, insbesondere plattenförmigen, Stahlblock durch Materialabtrag mittels eines spanabhebenden Verfahrens hergestellt sind.

9. Befestigungseinrichtung nach einem der voranstehenden Ansprüche,
**dadurch gekennzeichnet, dass**
das Klemmelement (100) und/oder das Gegenklemmelement (110) durch ein Bauteil, insbesondere in Form eines U-förmigen Strangpressprofils, gebildet ist, bei dem zwei parallele Endabschnitte jeweils eine äußere Stützwand bilden, die sich auf der Montagebasis (30) abstützt.

10. Befestigungseinrichtung nach Anspruch 9,
**dadurch gekennzeichnet, dass**
auf der Innenseite des Klemmelements (100) und/oder des Gegenklemmelements (110) mindestens ein Stützelement (103) angeordnet ist, das sich in Richtung auf die Montagebasis (30) erstreckt und sich auf der Montagebasis (30) abstützt.

11. Befestigungseinrichtung nach einem der voranstehenden Ansprüche,
**dadurch gekennzeichnet, dass**
das Klemmelement und/oder das Gegenklemmelement im Bereich der eingeklemmten Montagebasis zwei oder mehr Durchgangslöcher (320) aufweist, denen jeweils ein Innengewinde (330) zugeordnet ist.

12. Befestigungseinrichtung (10) nach einem der voranstehenden Ansprüche,
**dadurch gekennzeichnet, dass**

- zwei oder mehr Durchgangslöcher (320) auf einer fiktiven Verbindungslinie (FVL) liegen, die parallel zur Längsrichtung der Montagebasis angeordnet ist, und/oder

- zwei oder mehr Innengewinde (330) auf einer fiktiven Verbindungslinie (FVL) liegen, die parallel zur Längsrichtung der Montagebasis angeordnet ist, und/oder

- zwei oder mehr Gewindeelemente (310, 1000, 1010), die sich auf der Montagebasis abstützen oder, insbesondere durch Bohrlöcher, in diese hineinragen, auf einer fiktiven Verbindungslinie (FVL) liegen, die parallel zur Längsrichtung der Montagebasis angeordnet ist, und/oder

- Bohrlöcher in der Montagebasis, in die Gewindeelemente (310, 1000, 1010) hineinragen oder hineinragen könnten, auf einer fiktiven Verbindungslinie (FVL) liegen, die parallel zur Längsrichtung der Montagebasis angeordnet ist.

**13.** Verfahren zum Montieren einer Befestigungseinrichtung nach einem der voranstehenden Ansprüche, wobei bei dem Verfahren das Klemmelement (100) und das Gegenklemmelement (110) derart miteinander verbunden werden, dass das Klemmelement (100) und das Gegenklemmelement (110) einen Abschnitt der Montagebasis (30) einklemmen,

**dadurch gekennzeichnet, dass**

- die Haltemittel (90), insbesondere das Klemmelement und/oder das Gegenklemmelement, im Bereich der eingeklemmten Montagebasis mindestens ein Durchgangsloch (320) und mindestens ein Innengewinde (330) aufweisen und

- in das Innengewinde (330) ein Gewindeelement (310, 1000, 1010) geschraubt wird, bis dieses durch das Durchgangsloch (320) hindurch in Richtung auf die Montagebasis hindurchragt und sich auf der Außenseite der Montagebasis (30) abstützt oder mit einem hineinragenden Ende in ein Loch in der Montagebasis in die Montagebasis (30) hineinragt.

**14.** Verfahren nach Anspruch 13,
**dadurch gekennzeichnet, dass**

- vor dem Einschrauben des Gewindeelements (310, 1000, 1010) ein Bohrer (350), dessen Außendurchmesser kleiner als der Innendurchmesser des Innengewindes ist, durch das Durchgangsloch (320) und das Innengewinde (330) hindurch geführt wird, auf die Montagebasis aufgesetzt wird und ein Bohrloch (351) in die Montagebasis gebohrt wird und

- das Gewindeelement (310, 1000, 1010) soweit eingeschraubt wird, dass zumindest das Ende des Gewindeelements (310, 1000, 1010) in das Bohrloch (351) in der Montagebasis (30) hineinragt.

**15.** Verfahren nach Anspruch 13,
**dadurch gekennzeichnet, dass**

- das Gewindeelement (310, 1000, 1010) soweit eingeschraubt wird, dass das Ende des Gewindeelements (310, 1000, 1010) auf der Montagebasis aufliegt und die Haltemittel (90) und die innenliegende Montagebasis (30) durch das Gewindeelement (310, 1000, 1010) verklemmt werden.

**Claims**

**1.** Fastening device (10) for fastening a mast (80) to adjacent roof rafters (20, 21) of a roof, having a mounting base (30), the stated mast (80) and holding means (90) for fastening the mast (80) to the mounting base (30),

- wherein the mounting base (30) comprises at least two sliding elements which engage one inside the other, to be precise an outer element which is formed by an outer tube (40), and an inner element which is formed by an inner tube (50) engaging in the outer tube (40) or by a rod engaging in the outer tube (40),

- wherein the holding means (90) comprise a clamping element (100) and a counter-clamping element (110) which can be connected to one another in such a way that the clamping element (100) and the counter-clamping element (110) clamp in a portion of the mounting base (30), and

- wherein the mast foot (81) is mounted on the clamping element (100),

- wherein at least one threaded element (310, 1000, 1010), which is provided at least in certain portions with an external thread (314, 1001, 1011), is present and

- wherein the holding means (90), in particular the clamping element (100) and/or the counter-clamping element (110), have a through-hole (320) and an associated internal thread (330) in the region of the clamped-in mounting base (30),

**characterized in that**

- the threaded element (310, 1000, 1010) screwed with the internal thread (330) projects inwardly through the through-hole (320) in the direction of the mounting base and is supported on the outer side of the mounting base or projects by a projecting end into a hole in the mounting base.

**2.** Fastening device according to Claim 1,
**characterized in that**
the threaded element (310, 1000, 1010) tapers towards its end which lies on or projects into the mounting base.

**3.** Fastening device according to one of the preceding claims,
**characterized in that**

- the threaded element (310, 1000, 1010) projects into a hole in the mounting base, and
- the diameter of the threaded element (310, 1000, 1010), in the region of its front end projecting into the mounting base, is at most 80% of the diameter which the portion of the threaded element (310, 1000, 1010) that is screwed with the internal thread (330) has.

**4.** Fastening device according to one of the preceding claims,
**characterized in that**
the internal thread (330) is formed in the through-hole (320), in particular is cut or pressed into it.

**5.** Fastening device according to one of the preceding Claims 1 to 4,
**characterized in that**
the clamping element and/or the counter-clamping element have or has an inner-thread element, in particular in the form of a nut (340), which bears the internal thread (330) and which is mounted on the outer side or the inner side of the clamping element or counter-clamping element and overlaps with, in particular is aligned with, the through-hole (320).

**6.** Fastening device according to one of the preceding claims,
**characterized in that**
the threaded element (310, 1000, 1010) is a screw (310) whose screw head (312) is accessible on the outer side (100a) of the holding means (90), in particular the outer side of the clamping element and/or of the counter-clamping element.

**7.** Fastening device according to one of the preceding claims,
**characterized in that**

- the clamping element (100) and/or the counter-clamping element (110) consist or consists of a one-piece metal body,
- wherein steps (200) are formed on the inner side of the clamping element (100) and/or of the counter-clamping element (110), which steps or at least their step edges (201) bear against the mounting base (30) after the mounting of the clamping element (100) and/or the counter-clamping element (110).

**8.** Fastening device according to Claim 7,
**characterized in that**
the clamping element (100) and/or the counter-clamping element (110) are produced from a one-piece parallelepipedal, in particular plate-shaped, steel block by material removal by means of a machining process.

**9.** Fastening device according to one of the preceding claims,
**characterized in that**
the clamping element (100) and/or the counter-clamping element (110) are or is formed by a component, in particular in the form of a U-shaped extruded profile, in which two parallel end portions each form an outer supporting wall which is supported on the mounting base (30).

**10.** Fastening device according to Claim 9,

**characterized in that**

at least one supporting element (103) is arranged on the inner side of the clamping element (100) and/or of the counter-clamping element (110), which supporting element extends in the direction of the mounting base (30) and is supported on the mounting base (30).

11. Fastening device according to one of the preceding claims,
**characterized in that**
the clamping element and/or the counter-clamping element have or has, in the region of the clamped-in mounting base, two or more through-holes (320) each of which is assigned an internal thread (330).

12. Fastening device (10) according to one of the preceding claims,
**characterized in that**

   - two or more through-holes (320) lie on an imaginary connecting line (FVL) which is arranged parallel to the longitudinal direction of the mounting base, and/or
   - two or more internal threads (330) lie on an imaginary connecting line (FVL) which is arranged parallel to the longitudinal direction of the mounting base, and/or
   - two or more threaded elements (310, 1000, 1010) which are supported on the mounting base or project into it, in particular through drilled holes, lie on an imaginary connecting line (FVL) which is arranged parallel to the longitudinal direction of the mounting base, and/or
   - drilled holes in the mounting base into which threaded elements (310, 1000, 1010) project or could project lie on an imaginary connecting line (FVL) which is arranged parallel to the longitudinal direction of the mounting base.

13. Method for mounting a fastening device according to one of the preceding claims, wherein, in the method, the clamping element (100) and the counter-clamping element (110) are connected to one another in such a way that the clamping element (100) and the counter-clamping element (110) clamp in a portion of the mounting base (30),
**characterized in that**

   - the holding means (90), in particular the clamping element and/or the counter-clamping element, have at least one through-hole (320) and at least one internal thread (330) in the region of the clamped-in mounting base, and
   - a threaded element (310, 1000, 1010) is screwed into the internal thread (330) until said threaded element projects through the through-hole (320) in the direction of the mounting base and is supported on the outer side of the mounting base (30), or projects by a projecting end into a hole in the mounting base into the mounting base (30).

14. Method according to Claim 13,
**characterized in that**

   - prior to screwing in the threaded element (310, 1000, 1010), a drill (350) whose outside diameter is smaller than the inside diameter of the internal thread is guided through the through-hole (320) and the internal thread (330), is applied to the mounting base and a drilled hole (351) is drilled into the mounting base, and
   - the threaded element (310, 1000, 1010) is screwed in to such an extent that at least the end of the threaded element (310, 1000, 1010) projects into the drilled hole (351) in the mounting base (30).

15. Method according to Claim 13,
**characterized in that**

   - the threaded element (310, 1000, 1010) is screwed in to such an extent that the end of the threaded element (310, 1000, 1010) lies on the mounting base, and the holding means (90) and the inner mounting base (30) are clamped by the threaded element (310, 1000, 1010).

**Revendications**

1. Dispositif de fixation (10) pour la fixation d'un mât (80) à des chevrons voisins (20, 21) d'un toit avec une base de montage (30), le mât précité (80) et des moyens de fixation (90) pour la fixation du mât (80) à la base de montage (30),

   - dans lequel la base de montage (30) comprend au moins deux éléments coulissants engagés l'un dans l'autre, notamment un élément extérieur, qui est formé par un tube extérieur (40), et un élément intérieur, qui est formé par un tube intérieur (50) engagé dans le tube extérieur (40) ou par une tige engagée dans le tube extérieur (40),
- dans lequel les moyens de fixation (90) présentent un élément de serrage (100) et un contre-élément de serrage (110), qui peuvent être assemblés l'un à l'autre de telle manière que l'élément de serrage (100) et le contre-élément de serrage (110) enserrent une partie de la base de montage (30),
- dans lequel le pied de mât (81) est installé sur l'élément de serrage (100), et
- dans lequel il se trouve au moins un élément fileté (310, 1000, 1010) muni au moins en partie d'un filet extérieur (314, 1001, 1011) et
- dans lequel les moyens de fixation (90), en particulier l'élément de serrage (100) et/ou le contre-élément de serrage (110), présentent dans la région de la base de montage enserrée (30) un trou de passage (320) et un filet intérieur associé (330),

**caractérisé en ce que**

- l'élément fileté (310, 1000, 1010) vissé avec le filet intérieur (330) passe à travers le trou de passage (320) vers l'intérieur en direction de la base de montage et s'appuie sur le côté extérieur de la base de montage ou pénètre avec une extrémité pénétrante dans un trou dans la base de montage.

2. Dispositif de fixation selon la revendication 1, **caractérisé en ce que** l'élément fileté (310, 1000, 1010) se rétrécit en direction de son extrémité appliquée sur la base de montage ou pénétrant dans celle-ci.

3. Dispositif de fixation selon l'une quelconque des revendications précédentes, **caractérisé en ce que**

- l'élément fileté (310, 1000, 1010) pénètre dans un trou dans la base de montage et
- le diamètre de l'élément fileté (310, 1000, 1010) vaut, dans la région de son extrémité avant pénétrant dans la base de montage, au maximum 80 % du diamètre que présente la partie de l'élément fileté (310, 1000, 1010) vissée avec le filet intérieur (330).

4. Dispositif de fixation selon l'une quelconque des revendications précédentes, **caractérisé en ce que** le filet intérieur (330) est formé dans le trou de passage (320), en particulier taillé ou pressé dans celui-ci.

5. Dispositif de fixation selon l'une quelconque des revendications précédentes 1 à 4, **caractérisé en ce que** l'élément de serrage et/ou le contre-élément de serrage présente un élément fileté intérieurement portant le filet intérieur (330), en particulier sous la forme d'un écrou (340), qui est placé sur le côté extérieur ou sur le côté intérieur de l'élément de serrage ou du contre-élément de serrage et qui recouvre, en particulier est aligné avec le trou de passage (320).

6. Dispositif de fixation selon l'une quelconque des revendications précédentes, **caractérisé en ce que** l'élément fileté (310, 1000, 1010) est une vis (310), dont la tête de vis (312) est accessible sur le côté extérieur (100a) des moyens de fixation (90), en particulier sur le côté extérieur de l'élément de serrage et/ou du contre-élément de serrage.

7. Dispositif de fixation selon l'une quelconque des revendications précédentes, **caractérisé en ce que**

- l'élément de serrage (100) et/ou le contre-élément de serrage (110) se compose(nt) d'un corps métallique d'un seul tenant,
- dans lequel des degrés (200) sont formés sur le côté intérieur de l'élément de serrage (100) et/ou du contre-élément de serrage (110), qui ou dont au moins les arêtes (201) s'appliquent sur la base de montage (30) après le montage de l'élément de serrage (100) et/ou du contre-élément de serrage (110).

8. Dispositif de fixation selon la revendication 7, **caractérisé en ce que** l'élément de serrage (100) et/ou le contre-élément de serrage (110) sont fabriqués à partir d'un bloc d'acier parallélépipédique d'un seul tenant, en particulier en forme de plaque, par enlèvement de matière au moyen d'un procédé d'usinage par enlèvement de copeaux.

9. Dispositif de fixation selon l'une quelconque des revendications précédentes, **caractérisé en ce que** l'élément de serrage (100) et/ou le contre-élément de serrage (110) est formé par un composant, en particulier sous la forme d'un profilé extrudé en forme de U, dans lequel deux parties d'extrémité parallèles forment chacune une paroi d'appui extérieure, qui s'appuie sur la base de montage (30).

**10.** Dispositif de fixation selon la revendication 9, **caractérisé en ce qu'**au moins un élément d'appui (103), qui s'étend en direction de la base de montage (30) et s'appuie sur la base de montage (30), est disposé sur le côté intérieur de l'élément de serrage (100) et/ou du contre-élément de serrage (110).

**11.** Dispositif de fixation selon l'une quelconque des revendications précédentes, **caractérisé en ce que** l'élément de serrage et/ou le contre-élément de serrage présente, dans la région de la base de montage enserrée, deux ou plusieurs trous de passage (320), auxquels est respectivement associé un filet intérieur (330) .

**12.** Dispositif de fixation (10) selon l'une quelconque des revendications précédentes, **caractérisé en ce que**

- deux ou plusieurs trous de passage (320) sont situés sur une ligne de liaison fictive (FVL), qui est disposée parallèlement à la direction longitudinale de la base de montage, et/ou
- deux ou plusieurs filets intérieurs (330) sont situés sur une ligne de liaison fictive (FVL), qui est disposée parallèlement à la direction longitudinale de la base de montage, et/ou
- deux ou plusieurs éléments filetés (310, 1000, 1010), qui s'appuient sur la base de montage ou qui pénètrent dans celle-ci, en particulier à travers des trous forés, sont situés sur une ligne de liaison fictive (FVL), qui est disposée parallèlement à la direction longitudinale de la base de montage, et/ou
- des trous forés dans la base de montage, dans lesquels des éléments filetés (310, 1000, 1010) pénètrent ou pourraient pénétrer, sont situés sur une ligne de liaison fictive (FVL), qui est disposée parallèlement à la direction longitudinale de la base de montage.

**13.** Procédé de montage d'un dispositif de fixation selon l'une quelconque des revendications précédentes, dans lequel on assemble l'un à l'autre dans le procédé l'élément de serrage (100) et le contre-élément de serrage (110), de telle manière que l'élément de serrage (100) et le contre-élément de serrage (110) enserrent une partie de la base de montage (30), **caractérisé en ce que**

- les moyens de fixation (90), en particulier l'élément de serrage et/ou le contre-élément de serrage, présentent dans la région de la base de montage enserrée au moins un trou de passage (320) et au moins un filet intérieur (330), et
- on visse un élément fileté (310, 1000, 1010) dans le filet intérieur (330), jusqu'à ce qu'il passe à travers le trou de passage (320) en direction de la base de montage et qu'il s'appuie sur le côté extérieur de la base de montage (30) ou qu'il pénètre dans la base de montage (30) avec une extrémité pénétrante dans un trou dans la base de montage (30).

**14.** Procédé selon la revendication 13, **caractérisé en ce que**

- avant le vissage de l'élément fileté (310, 1000, 1010), on conduit un foret (350), dont le diamètre extérieur est plus petit que le diamètre intérieur du filet intérieur, à travers le trou de passage (320) et le filet intérieur (330), on l'applique sur la base de montage et on fore un trou foré (351) dans la base de montage, et
- on visse l'élément fileté (310, 1000, 1010) jusqu'à ce qu'au moins l'extrémité de l'élément fileté (310, 1000, 1010) pénètre dans le trou foré (351) dans la base de montage (30).

**15.** Procédé selon la revendication 13, **caractérisé en ce que** l'on visse l'élément fileté (310, 1000, 1010) jusqu'à ce que l'extrémité de l'élément fileté (310, 1000, 1010) s'applique sur la base de montage et que les moyens de fixation (90) et la base de montage (30) située dans ceux-ci soient serrés par l'élément fileté (310, 1000, 1010).

Fig. 1

Fig. 2

Fig. 3

EP 3 316 395 B1

EP 3 316 395 B1

110

K110    450    450    201

450    200    F200    201

I110    V200    110i

R110    450    450    K110

111    112

A110

Fig. 4

Fig.5

Fig.6

Fig.7

Fig.8

Fig.9

Fig.10

Fig. 11

Fig. 12

EP 3 316 395 B1

Fig. 13

EP 3 316 395 B1

Fig.14

Fig.15

Fig.16

Fig.17

Fig.18

Fig.19

EP 3 316 395 B1

Fig. 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2913536 A1
- DE 102005047898 A1
- US 6937207 B1